# EUROPEAN PATENT SPECIFICATION

(11) **EP 4 371 926 B1**
(45) Date of publication and mention of the grant of the patent: **25.03.2026**
(21) Application number: 22842144.2
(22) Date of filing: 13.07.2022
(51) Int. Cl.: B67C 3/00, B67C 7/00, G01M 3/28, G01M 3/32, G05B 23/02, G01M 3/38

(54) **SYSTEM AND METHOD FOR DETECTING ABNORMALITY RELATED TO PARTITION WALL FOR ASEPTIC FILLING, AND METHOD FOR PRODUCING ASEPTIC FILLING SYSTEM**
SYSTEM UND VERFAHREN ZUR ERKENNUNG VON ANOMALIEN IN ZUSAMMENHANG MIT EINER TRENNWAND FÜR ASEPTISCHES FÜLLEN UND VERFAHREN ZUR HERSTELLUNG EINES ASEPTISCHEN FÜLLSYSTEMS
SYSTÈME ET PROCÉDÉ DE DÉTECTION D'ANOMALIE LIÉE À UNE PAROI DE SÉPARATION POUR REMPLISSAGE ASEPTIQUE, ET PROCÉDÉ DE PRODUCTION D'UN SYSTÈME DE REMPLISSAGE ASEPTIQUE

(30) Priority: 15.07.2021 JP 2021116863
(43) Date of publication of application: 22.05.2024
(73) Proprietor: Mitsubishi Heavy Industries Machinery Systems, Ltd., Kobe-shi, Hyogo 652-8585 (JP)
(72) Inventor: MIZUNO, Motohiro, Kobe-shi, Hyogo 652-8585 (JP); KOBAYASHI, Hiroyuki, Kobe-shi, Hyogo 652-8585 (JP)
(74) Representative: Hoffmann Eitle
(86) International application number: PCT/JP2022/027551
(87) International publication number: WO 2023/286802

(56) References cited:
- EP-A1- 3 064 468
- JP-A- 2004 359 266
- JP-A- 2006 298 382
- JP-A- H08 295 396
- US-A1- 2017 158 481

## Description

### Technical Field

The present disclosure relates to a system and method for detecting an abnormality related to a partition wall that separates an aseptic region/a non-aseptic region related to aseptic filling and a method for producing an aseptic filling system.

### Background Art

For example, an aseptic filling device that fills a container with a product liquid, such as a beverage, includes a rotating body that is rotationally driven and transports a plurality of containers while gripping the plurality of containers, a tank that stores the product liquid, and a plurality of filling valves that are provided in the rotating body (For example, PTL 1). The inside of a chamber member that surrounds a filling machine including the rotating body and the filling valves is controlled to have a positive pressure with respect to the atmosphere.

The filling valve includes a valve stem that is inserted into a flow path in a valve body to which the product liquid is supplied, a driving mechanism, such as an electric cylinder or an air cylinder, that drives the valve stem, and the valve body that is provided in the valve stem and moves close to or away from a valve seat to open and close a discharge portion. Each filling valve discharges the product liquid, which is supplied from the tank through a pipe, to the container from the discharge portion while following the rotation of the rotating body.

The insides of the pipe, the filling valve, and the like that come into contact with the product liquid are cleaned and sterilized on a regular basis or when the product is switched. The filling device includes a closing device that closes the discharge portion of the filling valve in order to prevent the outflow of chemicals and the like supplied to the filling valve from the discharge portion during internal cleaning and internal sterilization and to set a recovery passage for the chemicals and the like. The closing device includes a closing portion that closes the discharge portion and a driving mechanism, such as an air cylinder, that drives the closing portion.

The closing portion is disposed in an aseptic region that is kept in an aseptic state, similarly to the discharge portion of the filling valve and the container. A diaphragm serving as a partition wall that separates the aseptic region from the non-aseptic region while allowing the displacement of the moving up and down and rotation of a shaft member that can be moved up and down and rotated to attach and detach the closing portion to and from the discharge portion is provided between the shaft member and a support body through which the shaft member passes. A gap between the shaft member and the support body is sealed by the diaphragm such that the aseptic region is kept in the aseptic state.

The filling valve described in PTL 1 includes a bellows corresponding to the partition wall used for a movable portion, similarly to the diaphragm. The bellows is provided between the valve stem that is moved forward and backward in a vertical direction and the valve body through which the valve stem passes and separates a flow path of the product liquid which is the aseptic region from the non-aseptic region which is outside the valve body and in which the electric cylinder is disposed.

### Citation List

### Patent Literature

[PTL 1] Japanese Unexamined Patent Application Publication No. 2012-176783

Further related art may be found in EP 3 064 468 A1, which describes a diagnostic kit and method for monitoring the operation status and reliability of a container processing machine. In this document, a leak detection system for a filling machine is disclosed. The system comprises an aseptic region in which a discharge portion of each of a plurality of filling valves for filling containers is provided, and a non-aseptic region around the aseptic region. The system also comprises a plurality filling valves and a medium supply unit configured to supply a detection medium used for detecting an abnormality related to a partition wall which is included in the filling valve and which separates the aseptic region from the non-aseptic region, to the plurality of filling valves. The detection, respectively monitoring, is made by means of at least one air flow-meter and at least one pressure sensor. The partition wall seals between a movable shaft portion of the valve whilst allowing displacement of the movable shaft portion with respect to a support portion. A closed space formed by the partition wall, the support portion and the movable shaft portion holds the detection medium supplied in a case where an abnormality does not occur and leaks the detection medium in a case where the abnormality occurs.

### Summary of Invention

### Technical Problem

When a partition wall member provided in the filling valve or the closing device is damaged, it is difficult to maintain the aseptic region in the aseptic state. In order to avoid this, the filling valve and the closing device are disassembled, and then the partition wall member is inspected on a regular basis or when there is a concern about maintaining the aseptic state.

However, in order to perform this inspection, it is necessary to disassemble a large number of filling valves provided in the filling machine and the same number of closing devices as the filling valves one by one and to reassemble them after the inspection. Therefore, it takes a lot of time and effort for the inspection. In addition, even when the partition wall member is not damaged, in a case where the aseptic region is not sufficiently sealed with respect to the non-aseptic region due to the installation failure of the partition wall member, it is not possible to find the insufficient sealing with the inspection of the partition wall member removed by the disassembly of the closing device.

The above-mentioned problem can also be applied to abnormalities, such as damage and installation failure of the bellows, as a partition wall provided in a capper that attaches a cap to a mouth portion of the container filled with the product liquid.

Based on the above, an object of the present disclosure is to provide a system and method that can easily check an abnormality that may occur in a partition wall used for aseptic filling to reduce a maintenance cost of an aseptic filling device and to contribute to the improvement of productivity.

### Solution to Problem

According to the present invention, there is provided a partition wall abnormality detection system including: an aseptic region in which a discharge portion of each of a plurality of filling valves provided in a filling machine that fills each container with contents while transporting a container group is located; a non-aseptic region around the aseptic region; at least one type of functional unit selected from a plurality of first-type functional units individually corresponding to the plurality of filling valves, a plurality of second-type functional units individually included in the plurality of filling valves, and a plurality of third-type functional units corresponding to a plurality of capping heads provided in a capper that attaches a cap to each container while transporting the container group filled with the contents; and a medium supply unit configured to supply a detection medium used for detecting an abnormality related to a partition wall, which is included in the functional unit and separates the aseptic region from the non-aseptic region, to the plurality of functional units.

The functional unit includes a movable shaft portion that is displaceable at least in an axial direction and the partition wall that seals between the movable shaft portion and a support portion disposed around an axis of the movable shaft portion while allowing displacement of the movable shaft portion with respect to the support portion.

A closed space formed by the partition wall, the support portion, and the movable shaft portion holds the detection medium supplied by the medium supply unit in a case where the abnormality does not occur and leaks the detection medium in a case where the abnormality occurs.

A partition wall abnormality detection method according to the present invention is a partition wall abnormality detection method for detecting an abnormality related to a partition wall included in a functional unit for aseptic filling.

The functional unit corresponds to at least one type selected from a plurality of first-type functional units individually corresponding to a plurality of filling valves, a plurality of second-type functional units individually included in the plurality of filling valves, and a plurality of third-type functional units corresponding to a plurality of capping heads provided in a capper that attaches a cap to each container while transporting a container group filled with contents.

The functional unit includes a movable shaft portion that is displaceable at least in an axial direction and the partition wall that seals between the movable shaft portion and a support portion disposed around an axis of the movable shaft portion while allowing displacement of the movable shaft portion with respect to the support portion.

The partition wall separates an aseptic region, in which a discharge portion of each of a plurality of filling valves provided in a filling machine that fills each container with the contents while transporting the container group is located, from a non-aseptic region around the aseptic region.

The partition wall abnormality detection method includes: a supply step of supplying a detection medium used for detecting the abnormality to the plurality of functional units; and a detection step of detecting the abnormality related to the partition wall on the basis of a state of the detection medium supplied to the closed space. In the supply step, a closed space formed by the partition wall, the support portion, and the movable shaft portion holds the detection medium in a case where the abnormality does not occur and leaks the detection medium in a case where the abnormality occurs.

According to the present invention, there is provided a method for producing an aseptic filling system including a partition wall abnormality detection system. The method includes giving, to an existing aseptic filling system including an aseptic region in which a discharge portion of each of a plurality of filling valves provided in a filling machine that fills each container with contents while transporting a container group is located, a non-aseptic region around the aseptic region, and at least one type of functional unit selected from a plurality of first-type functional units individually corresponding to the plurality of filling valves, a plurality of second-type functional units individually included in the plurality of filling valves, and a plurality of third-type functional units corresponding to a plurality of capping heads provided in a capper that attaches a cap to each container while transporting the container group filled with the contents, a medium supply unit configured to supply a detection medium used for detecting an abnormality related to a partition wall, which is included in the functional unit and separates the aseptic region from the non-aseptic region, to the plurality of functional units.

The functional unit includes a movable shaft portion that is displaceable at least in an axial direction and the partition wall that seals between the movable shaft portion and a support portion disposed around an axis of the movable shaft portion while allowing displacement of the movable shaft portion with respect to the support portion.

A closed space formed by the partition wall, the support portion, and the movable shaft portion holds the detection medium supplied by the medium supply unit in a case where the abnormality does not occur and leaks the detection medium in a case where the abnormality occurs.

### Advantageous Effects of Invention

In a case where a detection medium is supplied to a closed space formed by a partition wall of each of a plurality of functional units (a closing device, a filling valve, a capping unit, and the like) provided in an aseptic filling system together with the surrounding members and an abnormality related to the partition wall occurs, the detection medium leaks from the closed space. It is possible to detect that the abnormality related to the partition wall has occurred on the basis of the state of the detection medium in this case, for example, on the basis of the flow rate or pressure of the detection medium in a case where the detection medium is a fluid. In addition, for example, light can be supplied as the detection medium to the closed space, and it is possible to detect the abnormality related to the partition wall on the basis of the leakage of the light from the partition wall.

According to the present disclosure, it is possible to detect abnormalities related to a large number of partition walls provided in the aseptic filling system at once without disassembling the functional units even when the aseptic filling system is in operation.

According to the present disclosure, it is sufficient to disassemble the functional units only in a case where the abnormality related to the partition wall is detected. For this reason, it is possible to easily prevent human errors and to reliably detect the abnormality related to the partition wall while significantly reducing the effort and time required for the conventional operation of disassembling all of the functional units one by one, inspecting or replacing the partition wall, and reassembling the functional units. Therefore, it is possible to reduce the maintenance cost of the aseptic filling system and to contribute to the improvement of productivity.

### Brief Description of Drawings

Fig. 1 is a plan view schematically showing an aseptic filling system including a partition wall abnormality detection system according to an embodiment of the present invention.
Fig. 2 is a side sectional view showing a filling machine, members installed around the filling machine, and a chamber member surrounding the filling machine and the members shown in Fig. 1.
Fig. 3 is a vertical sectional view showing an example of a filling valve shown in Fig. 2.
Fig. 4A is a vertical sectional view showing an example of a closing device shown in Fig. 2. Fig. 4B is a plan view showing a portion of an inner wall of a housing of the closing device and a cam follower.
Fig. 5 is a diagram showing a plurality of closing devices used during internal cleaning and internal sterilization of a supply passage of a product liquid, such as a filling valve, a supply unit for a detection medium (air) used for detecting an abnormality related to a partition wall included in each closing device, and a measurement unit that can measure a flow rate of air.
Fig. 6A is a graph schematically showing an example of a change in the flow rate of air supplied to a closed space formed by the partition wall and the surrounding members. Fig. 6B is a graph schematically showing an example of a change in the pressure of the air supplied to the closed space.
Figs. 7A and 7B are diagrams showing a modification example in which abnormality detection is performed for each group of closing devices.
Fig. 8 is a diagram showing a modification example including a plurality of flow meters.
Fig. 9 is a diagram showing an example of application to a capping head.
Fig. 10 is a diagram showing a modification example in which light is used as the detection medium. Description of Embodiments

Hereinafter, embodiments of the present invention will be described with reference to the accompanying drawings.

In the description of a system and method for detecting an abnormality of a partition wall used for aseptic filling, first, a schematic configuration of an aseptic filling system 1 will be described.

### [Schematic Configuration of Aseptic Filling System]

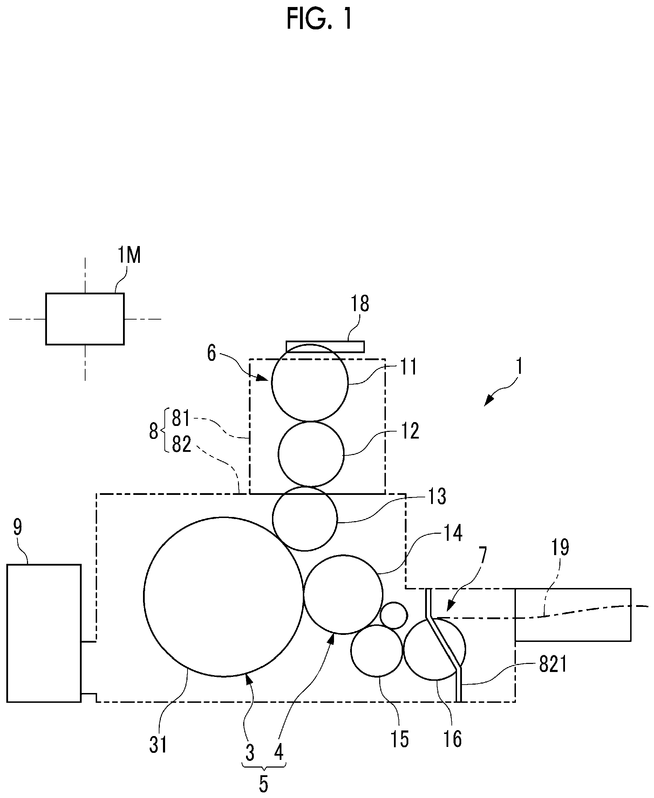

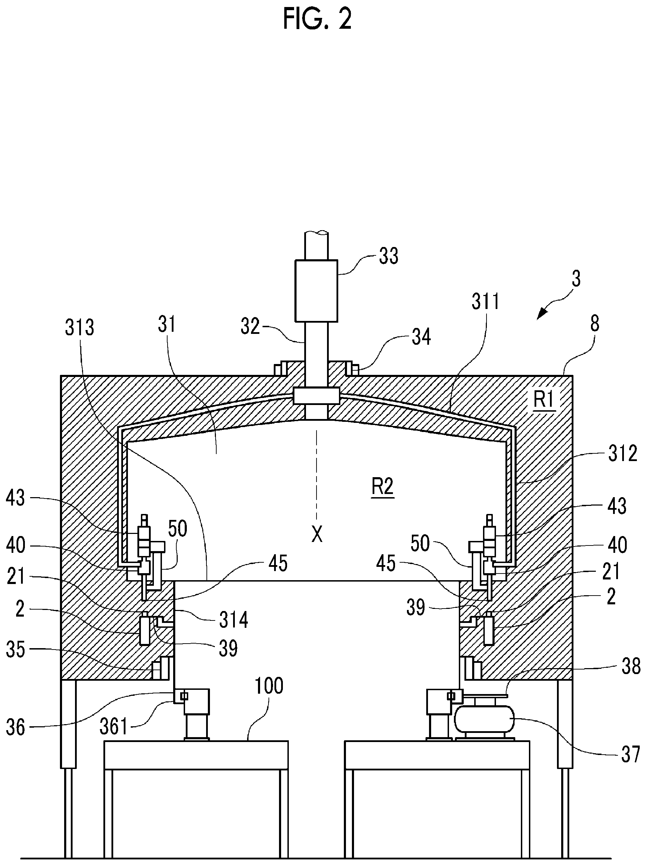

As shown in Fig. 1, for example, the aseptic filling system 1 includes a filling device 5 including a filling machine 3 and a capper 4, a container supply unit 6 that supplies a container 2 (Fig. 2) from an upstream side of a production line to the filling device 5, a discharge unit 7 that discharges the container 2 from the filling device 5 to a downstream side of the production line, a chamber member 8, an air supply unit 9, and a control device 1M.

The chamber member 8 covers the container supply unit 6, the filling device 5, and the discharge unit 7. The air supply unit 9 sends air into the chamber member 8. Since the inside of the chamber member 8 is controlled to have a positive pressure with respect to atmospheric pressure, the invasion of a foreign matter into the chamber member is prevented.

For example, the aseptic filling system 1 constitutes a production line (not shown) for a product obtained by filling the container 2 with a product liquid such as a beverage or a medicine. The container 2 is made of, for example, a resin material, such as polyethylene terephthalate (PET), or a metallic material, such as an aluminum alloy, and has a bottle shape.

The aseptic filling system 1 performs a filling and sealing process in the chamber member 8 while transporting a container group (a plurality of containers 2) with a rotary transport mechanism including a plurality of rotating bodies 11 to 13, 31, and 14 to 16 which are rotated about each axis. The container 2 which has been introduced from a blow forming machine (not shown) to the container supply unit 6 through an airtight shutter 18 is subjected to a product liquid filling process and a sealing process of attaching a cap and is then discharged to a conveyor 19 by the discharge unit 7.

### [Schematic Configuration of Filling Machine]

The filling machine 3 shown in Figs. 1 and 2 fills each container 2 of the container group, which is transported while being supported by the rotating body 31, with the product liquid using a plurality of filling valves 40 which follow the rotation of the rotating body 31. A liquid supply pipe 32 that supplies the product liquid to each filling valve 40 is connected to a tank (not shown) that stores the product liquid through a rotary joint 33.

As shown in Fig. 2, the periphery, upper side, and lower side of the rotating body 31 are surrounded by the chamber member 8. An aseptic region R1 that is kept in an aseptic state in the chamber member 8 is hatched. The aseptic region R1 is sealed off from a non-aseptic region R2 in the chamber member 8 by members, such as the chamber member 8, a canopy 311 of the rotating body 31, a side plate 312, a base plate 313, a body 314, an upper water seal 34, a lower water seal 35, and partition walls of the filling valve 40 and a closing device 50 which will be described below. A worker can enter the non-aseptic region R2 for inspection, maintenance, and the like, and a work table 100 is installed in the non-aseptic region R2. A driving mechanism (for example, a driving device 37), such as a motor or an air cylinder, the rotary joint 33, a supply source 610 of compressed air which will be described below, and the like are disposed in the non-aseptic region R2.

A bearing 36 that rotatably supports the rotating body 31 on a horizontal plane is provided at a lower end of the cylindrical body 314. An outer ring 361 of the bearing 36 is provided with a ring gear (not shown) that is formed in an annular shape. The ring gear is engaged with a gear 38 that is rotated by torque output from the driving device 37. The rotating body 31 is driven about an axis X along the vertical direction (perpendicular direction) by the rotation of the gear 38 and the ring gear.

The rotating body 31 is provided with a plurality of grippers 39 that grip each container 2 of the container group, the plurality of filling valves 40 (second-type functional units) that fill each container 2 with the product liquid, a plurality of measurement devices (not shown) that measure each container 2 filled with the product liquid, and a plurality of closing devices 50 (first-type functional units) that close discharge portions 45 of the filling valves 40.

The filling valve 40 is provided in an upright posture along the vertical direction in the vicinity of an outer peripheral portion of the rotating body 31. The filling valves 40 are disposed at equal pitches on the circumference having the axis X as the center.

When the container 2 is gripped by the gripper 39, a mouth portion 21 of the container 2 is disposed directly below the discharge portion 45 of the filling valve 40. The container 2 that is moved in a circumferential direction of the rotating body 31 with the rotation of the rotating body 31 is filled with a prescribed amount of product liquid by the filling valve 40.

The insides of a product liquid tank, the liquid supply pipe 32, the filling valve 40, and the like are cleaned and sterilized on a regular basis or when the product is switched. The closing device 50 is used when the insides are cleaned and sterilized. The rotating body 31 is provided with the same number of closing devices 50 as the filling valves 40.

### [Filling Valve]

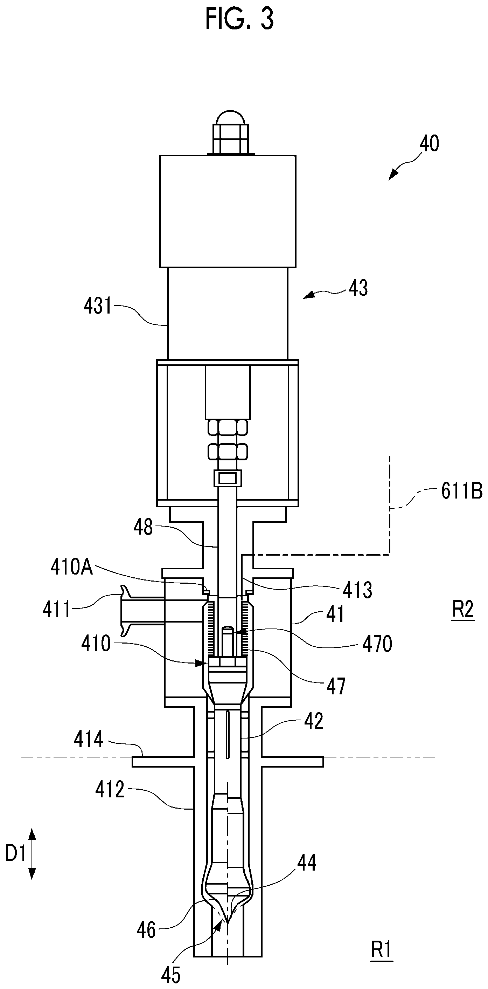

Fig. 3 shows an example of the configuration of the filling valve 40. The filling valve 40 includes a housing 41 in which a flow path 410 of the product liquid is set, a valve stem 42 and a rod 48 which are disposed in the vertical direction along the flow path 410, a driving mechanism 43, such as an air cylinder or an electric cylinder, which drives the valve stem 42 in the vertical direction, a valve body 46 which is provided in the valve stem 42 and opens and closes the discharge portion 45, and a bellows 47.

The housing 41 is provided with a liquid introduction portion 411 to which the liquid supply pipe 32 is connected, a nozzle 412 which faces the mouth portion 21 (Fig. 2) of the container 2, and a cylinder 431 of the driving mechanism 43.

The valve stem 42 is connected to an output shaft (not shown) of the driving mechanism 43 through the rod 48. The valve stem 42 and the rod 48, both of which correspond to a movable shaft portion, can be displaced in an axial direction D1 (vertical direction) with respect to the housing 41 as a support portion that is disposed around the axis, following the displacement of the output shaft of the driving mechanism 43.

When the valve stem 42 is displaced downward, the valve body 46 is pressed against a valve seat 44 that is formed inside the nozzle 412, and the discharge portion 45 corresponding to a gap between the valve body 46 and the nozzle 412 is closed. When the valve stem 42 is displaced upward, the valve body 46 is separated from the valve seat 44, and the discharge portion 45 is opened. Then, the product liquid is discharged from the flow path 410 to the mouth portion 21 of the container 2.

When a flange 414 that is provided in an outer peripheral portion of the nozzle 412 is fixed to a member such as the base plate 313 of the rotating body 31, the lower side of the nozzle 412 passing through the member is disposed in the aseptic region R1 (Fig. 1). The aseptic region R1 includes the discharge portion 45 and the flow path 410. The discharge portion 45 and the flow path 410 are separated from the non-aseptic region R2 by the bellows 47 as the partition wall.

The bellows 47 corresponds to a bellows-shaped cylindrical body that is disposed between an outer peripheral portion of the rod 48 and an inner wall of the flow path 410 surrounding the rod 48. The bellows 47 is made of an appropriate metallic material or an appropriate resin material.

A lower end portion of the bellows 47 is held by an upper end portion of the valve stem 42, and an upper end portion of the bellows 47 is held by a holding portion 410A formed in the inner wall of the flow path 410. Since the bellows 47 can be expanded and contracted in the axial direction D1, the bellows 47 seals between the housing 41, and the rod 48 and the valve stem 42 while allowing the displacement of the rod 48 and the valve stem 42 in the axial direction D1 with respect to the housing 41.

### [Closing Device]

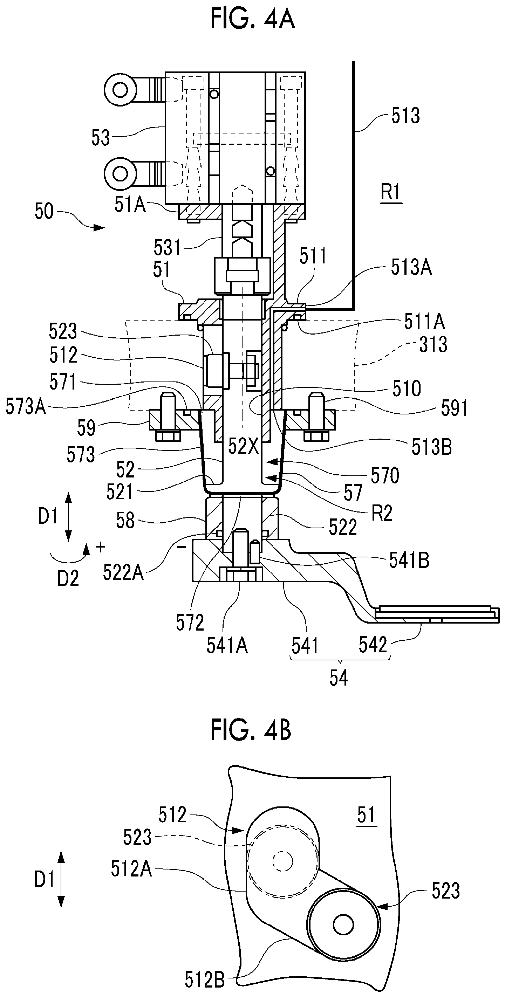

As shown in Fig. 4A, the closing device 50 includes a housing 51 having a substantially cylindrical shape, a movable shaft portion 52 that is inserted into an insertion hole 510 passing through the housing 51 in the vertical direction, a driving mechanism 53, such as an air cylinder or an electric cylinder, that drives the movable shaft portion 52 in the vertical direction, a cam follower 523, a closing portion 54 that closes the discharge portion 45 in operative association with the displacement of the movable shaft portion 52, a diaphragm 57, a first holding portion 58, and a second holding portion 59.

When a flange 511 that is provided in an outer peripheral portion of the housing 51 is fixed to a member such as the base plate 313 of the rotating body 31, the lower side of the movable shaft portion 52 passing through the member and the closing portion 54 are disposed in the aseptic region R1 (Fig. 1). The closing portion 54 and the non-aseptic region R2 are separated by the diaphragm 57 as a partition wall. A cylinder of the driving mechanism 53 is provided in an upper end portion 51A of the housing 51.

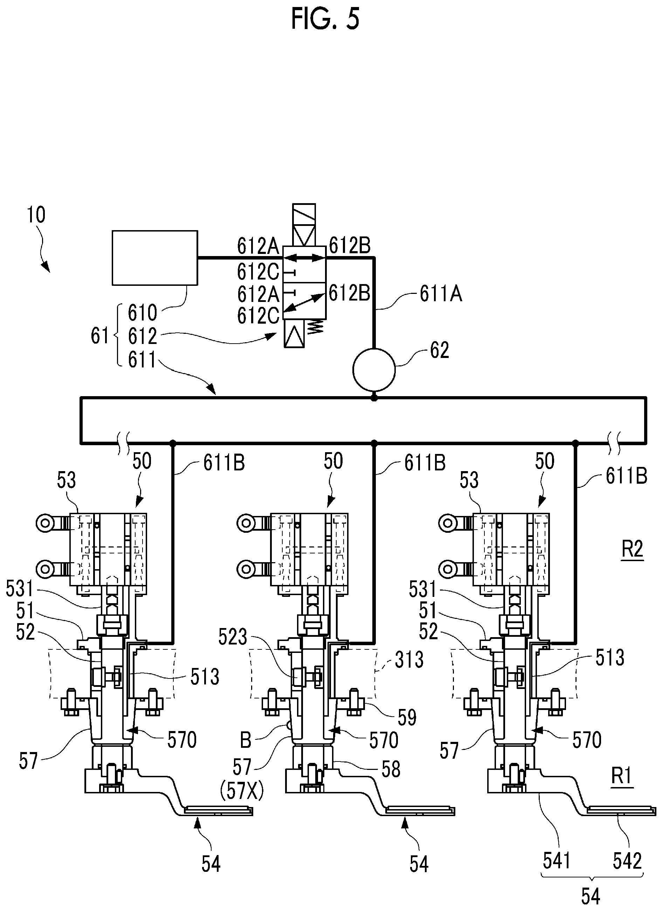

A passage 513 that leads to the inside of the diaphragm 57 is formed in the housing 51. The passage 513 is connected to a supply and discharge valve 612 (Fig. 5) including a port that is open to the atmosphere.

An upper end portion of the movable shaft portion 52 is coupled to an output shaft 531 of the driving mechanism 53. The movable shaft portion 52 can be displaced in the axial direction D1 (vertical direction) with respect to a support portion, such as the housing 51 or the base plate 313, that is disposed around the axis of the movable shaft portion 52, with the displacement of the output shaft 531. In this case, the movable shaft portion 52 is guided by the housing 51.

A flange 521 that presses the diaphragm 57 against the first holding portion 58 and a connection portion 522 that extends below the flange 521 are formed on the lower end side of the movable shaft portion 52. The connection portion 522 passes through the first holding portion 58.

The cam follower 523 is provided between an upper end of the movable shaft portion 52 and the flange 521 and is engaged with a cam groove 512 that is formed in the housing 51 as shown in Fig. 4B. When the movable shaft portion 52 is displaced in the axial direction D1 with the displacement of the output shaft 531, the cam follower 523 is displaced inside the cam groove 512. The cam groove 512 is composed of a first section 512A that is parallel to the axial direction D1 and a second section 512B that is inclined with respect to the axial direction D1. The first section 512A is connected to an upper end of the second section 512B and extends upward. When the cam follower 523 is guided by the second section 512B, the movable shaft portion 52 is also displaced in an axial rotation direction D2.

The closing portion 54 includes a fastening portion 541 that is fixed to a lower end of the connection portion 522 by a bolt 541A and a lid 542 that covers a lower end of the nozzle 412 of the filling valve 40 from below to close the discharge portion 45. The lid 542 is located at a position that is separated from an axis 52X of the movable shaft portion 52 in a direction orthogonal to the axis 52X and is disposed horizontally. In this embodiment, the lid 542 is located below the connection portion 522. However, the present disclosure is not necessarily limited thereto. The lid 542 may be disposed at the same height as the connection portion 522 or may be disposed above the connection portion 522 according to the height of the nozzle 412 of the filling valve 40.

The relative rotation of the movable shaft portion 52 and the closing portion 54 is regulated by a key 541B that is engaged with the fastening portion 541 and the connection portion 522. Therefore, the closing portion 54 is displaced integrally with the movable shaft portion 52.

The diaphragm 57 seals a space between the movable shaft portion 52 and the support portions, such as the housing 51 and the base plate 313, and allows the displacement of the movable shaft portion 52 with respect to the support portions in the axial direction D1 and the axial rotation direction D2. In order to allow the displacement of the movable shaft portion 52 in the axial direction D1 and the axial rotation direction D2, the diaphragm 57 is made of an appropriate resin material having flexibility or bendability, for example, a rubber-based material.

The diaphragm 57 is formed in a cup shape having an opening 571, a bottom portion 572, and a side wall 573, and the opening 571 is disposed to face upward. The connection portion 522 passes through the bottom portion 572. The flange 521 of the movable shaft portion 52 is disposed in the bottom portion 572. The inside of the diaphragm 57 corresponds to the non-aseptic region R2, and the outside of the diaphragm 57 corresponds to the aseptic region R1.

In order to separate the non-aseptic region R2 from the aseptic region R1 around the non-aseptic region R2, for example, a gap between the members of the closing device 50 is sealed by the following seal members (573A, 511A, and 522A).

The seal portion 573A having an annular shape is formed outside an upper end of the side wall 573, which rises from the bottom portion 572, in a radial direction. The seal portion 573A is formed to be thicker than other portions of the diaphragm 57 and is disposed on a lower surface of the base plate 313. The seal portion 573A is pressed against the base plate 313 by the plate-shaped second holding portion 59 in which a hole having a diameter corresponding to the outer diameter of the side wall 573 is formed. The second holding portion 59 is fixed to the base plate 313 by a plurality of bolts 591.

In addition, a first seal ring 522A is disposed between the first holding portion 58 and the connection portion 522 of the movable shaft portion 52 passing through the bottom portion 572 of the diaphragm 57. Further, a second seal ring 511A is disposed between an upper surface of the base plate 313 and the flange 511 of the housing 51.

While the cam follower 523 is displaced upward from the second section 512B and reaches a predetermined position of the first section 512A, the movable shaft portion 52 is displaced in the axial direction D1 and the axial rotation direction D2+ while deforming the diaphragm 57 from the state shown in Fig. 4A in the axial direction D1 and the axial rotation direction D2+. In this case, the closing portion 54 follows the displacement of the movable shaft portion 52 such that the discharge portion 45 is closed by the lid 542. When the discharge portion 45 is closed by the lid 542, a valve (not shown) that is provided in the filling valve 40 is operated, and the flow path 410 of the filling valve 40 communicates with a recovery passage (not shown). Therefore, it is possible to prevent purification media, such as hot water, a chemical, and steam, used for internal cleaning and internal sterilization from being discharged from the discharge portion 45 and to perform the internal cleaning and internal sterilization of pipes, the filling valve 40, and the like while recovering the purification media through the recovery passage.

When the cam follower 523 is displaced downward with respect to the cam groove 512 from the state in which the discharge portion 45 is closed by the lid 542, the movable shaft portion 52 is displaced in the axial direction D1 and the axial rotation direction D2- such that the lid 542 is separated from the discharge portion 45 and returns to a predetermined retract position. In this case, the discharge portion 45 is open to the aseptic region R1. A product is produced in a state in which the lid 542 is retracted with respect to the discharge portion 45.

As the inner volume of the diaphragm 57 is reduced by the operation of the movable shaft portion 52 when the discharge portion 45 is closed or opened, air in the diaphragm 57 is released from a third port 612C which is open to the atmosphere in the supply and discharge valve 612 (Fig. 5) through the passage 513 and a pipe line 611 that is connected to the passage 513 (see Fig. 5). That is, a passage that enables the inflow and outflow of the air in the diaphragm 57 is secured.

### [Partition Wall Abnormality Detection System]

The diaphragm 57 and the bellows 47 are likely to be damaged due to the repeated operations of the closing device 50 or the filling valve 40. In addition, the diaphragm 57 and the bellows 47 are likely to be installed in a state in which the sealing between relatively displaceable members is insufficient.

Therefore, in the aseptic filling system 1 according to this embodiment, when a damage or installation failure occurs in the diaphragm 57 or the bellows 47 as the partition wall that separates the aseptic region R1 from the non-aseptic region R2, the damage or installation failure is detected as an abnormality related to the partition wall. The aseptic filling system 1 includes a system 10 that detects an abnormality related to a partition wall for aseptic filling.

Hereinafter, for example, a configuration of the partition wall abnormality detection system 10 for aseptic filling in a case where an abnormality related to the diaphragm 57 is detected will be described. A case where the abnormality related to the bellows 47 is detected will be described below.

Fig. 5 shows an example of the configuration of the partition wall abnormality detection system 10 for detecting the abnormality related to the diaphragm 57 of the closing device 50. This system includes the aseptic region R1, the non-aseptic region R2, the plurality of closing devices 50 provided in the rotating body 31, a medium supply unit 61 configured to supply a gas-phase fluid (air) as a detection medium to the diaphragms 57 of the plurality of closing devices 50, and a flow meter 62 that can measure the flow rate of the detection medium. The partition wall abnormality detection system 10 detects, for example, the damage of the diaphragm 57 and the installation failure of the diaphragm 57 to the movable shaft portion 52, the base plate 313, and the like on the basis of the state of the detection medium supplied to a closed space 570 formed by the movable shaft portion 52 and the surrounding members.

The closed space 570 corresponds to a space surrounded by the diaphragm 57, the movable shaft portion 52, the housing 51, and the base plate 313. In a case where an abnormality, such as damage or installation failure of the diaphragm 57, does not occur, the closed space 570 holds the air supplied by the medium supply unit 61. In a case where the abnormality occurs, the air leaks to the outside of the closed space 570.

In addition, instead of the air, steam can be used as the detection medium.

The medium supply unit 61 includes the supply source 610 of the compressed air, the pipe line 611 for supplying the air supplied from the supply source 610 to the closed space 570, and the supply and discharge valve 612 that can switch between the supply and discharge of the air.

It is preferable that the supply source 610 supplies air which has passed through a filter or the like to be sterilized. The pipe line 611 includes a main flow path 611A and a plurality of distribution flow paths 611B as shown as an example in Fig. 5. The air which is supplied from the supply source 610 and flows through the main flow path 611A is distributed from the main flow path 611A to the plurality of distribution flow paths 611B through the rotary joint 33 (Fig. 2).

The plurality of distribution flow paths 611B are individually connected to the closing devices 50. The medium supply unit 61 includes the same number of distribution flow paths 611B as the closing devices 50. The distribution flow paths 611B are connected to all of the closing devices 50 which are provided in the rotating body 31 and which include the remaining closing devices 50 (not shown in Fig. 5). The passage 513 formed in the housing 51 of the closing device 50 forms the end of the distribution flow path 611B. A tube or the like of the distribution flow path 611B is connected to the passage 513.

The passage 513 extends between a first opening 513A (Fig. 4A) that is formed in a side wall of the housing 51 above the base plate 313 and a second opening 513B (Fig. 4A) that is located below the first opening 513A and that faces the opening 571 of the diaphragm 57.

The supply and discharge valve 612 is an electromagnetic valve and is provided between the supply source 610 and the rotary joint 33 (Fig. 2) in the main flow path 611A. The supply and discharge valve 612 includes a first port 612A that is connected to the supply source 610, a second port 612B that is connected to the closing device 50, and the third port 612C that is open to the atmosphere. The supply and discharge valve 612 switches a flow path in the supply and discharge valve 612 in response to a command from the control device 1M (Fig. 1) to switch between the supply of air to the closed space 570 and the discharge of air from the closed space 570.

The flow meter 62 is provided between the supply source 610 and the rotary joint 33 in the main flow path 611A, similarly to the supply and discharge valve 612. The flow meter 62 can be provided, for example, on the downstream or upstream side of the supply and discharge valve 612.

The partition wall abnormality detection system 10 can not only be given to a newly built aseptic filling system 1, but can also be produced by adding at least the medium supply unit 61 to the existing aseptic filling system.

When the abnormality related to the diaphragm 57 is detected, the supply and discharge valve 612 is switched to the supply of air to perform a step (supply step) of supplying air to the closed space 570. Then, air is supplied to the closed spaces 570 in the diaphragms 57 of all of the closing devices 50 connected to the main flow path 611A through the distribution flow paths 611B.

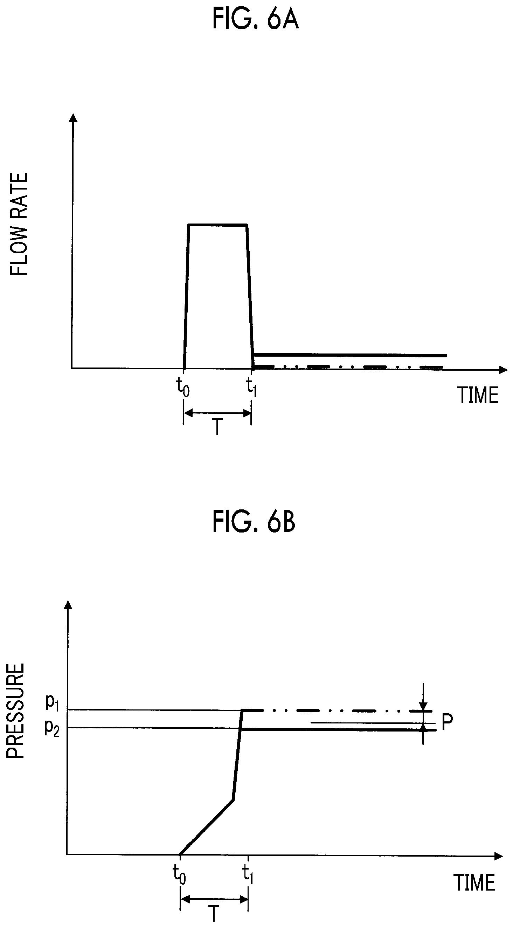

Fig. 6A schematically shows an example of a change in the flow rate of air measured by the flow meter 62. Air flows from the first port 612A to the second port 612B by the excitation of the supply and discharge valve 612. In this case, air is supplied to the closed space 570 by the medium supply unit 61 and is pushed into the closed space 570.

When an abnormality does not occur in any of the diaphragms 57 of the closing devices 50 connected to the main flow path 611A through the distribution flow paths 611B, the air remains in the closed space 570 of each closing device 50. Therefore, as represented by a two-dot chain line in Fig. 6A, the flow of air in the main flow path 611A and each distribution flow path 611B is substantially stopped after a certain time T has elapsed since a start time t₀ of air supply. Then, the value of the flow rate measured by the flow meter 62 indicates 0 or substantially 0.

On the other hand, when an abnormality occurs in any of the diaphragms 57 of the closing devices 50 connected to the main flow path 611A, air leaks from the closed space 570 corresponding to the diaphragm 57, in which the abnormality has occurred, through a damaged portion of the diaphragm 57 or the like. Therefore, for example, as represented by a solid line in Fig. 6A, the flow rate of air measured by the flow meter 62 is neither 0 nor substantially 0 even after the predetermined time T has elapsed since the start time t₀ of air supply.

Therefore, following the step of supplying air to the closed space 570, the flow rate of air is measured by the flow meter 62 (measurement step), which makes it possible to detect whether an abnormality occurs in the diaphragm 57 of any of the closing devices 50 on the basis of the value of the flow rate of air measured by the flow meter 62 (detection step). For example, when the value measured by the flow meter 62 is greater than an appropriate threshold value, it is possible to determine that the abnormality related to the diaphragm 57 has occurred in any of the closing devices 50. When the measured value is less than the threshold value, it is possible to determine that the abnormality related to the diaphragm 57 has not occurred in any of the closing devices 50 and that all of the diaphragms 57 are normal. This determination can be performed by visually checking the value measured by the flow meter 62 or by comparing data of the value measured by the flow meter 62 with the threshold value in the control device 1M.

After the abnormality is detected, the supply of air from the supply source 610 is stopped, and the supply and discharge valve 612 is de-excited such that air flows from the second port 612B to the third port 612C. Therefore, air can be discharged from the closed space 570 to the atmosphere.

Instead of the flow meter 62, a pressure sensor can be provided to detect the abnormality of the diaphragm 57 on the basis of the pressure value of air flowing through the main flow path 611A and the distribution flow path 611B.

That is, in a case where, since an abnormality has not occurred in any of the diaphragms 57 of the closing devices 50 connected to the main flow path 611A through the distribution flow paths 611B, the air supplied to the closed space 570 by the medium supply unit 61 is pushed into each closed space 570 and remains therein, the pressure value measured by the pressure sensor indicates a predetermined value p₁ after a certain time T has elapsed since the start time t₀ of air supply as represented by a two-dot chain line in Fig. 6B. After that, the pressure sensor continuously indicates a constant or substantially constant prescribed pressure p₁.

On the other hand, in a case where, since an abnormality has occurred in any of the diaphragms 57 of the closing devices 50, air leaks from any of the closed spaces 570, the pressure measured by the pressure sensor is not maintained at the prescribed pressure p₁ after the predetermined time T has elapsed. For example, as represented by a solid line in Fig. 6B, a pressure p₂ measured by the pressure sensor at a certain time t₁ that is the predetermined time T after the start time t₀ of air supply deviates from the prescribed pressure p₁ in a case where the abnormality related to the diaphragm 57 does not occur to a lower pressure side beyond an allowable range P, which depends on the degree of damage of the diaphragm 57 and the like.

Therefore, an appropriate threshold value or the like can be applied to the pressure of air after the predetermined time T has elapsed since the start time t₀ of air supply to detect the occurrence of the abnormality related to the diaphragm 57 of the closing device 50.

In addition, both the flow meter 62 and the pressure sensor may be used to detect the abnormality of the diaphragm 57 on the basis of the flow rate and pressure of air in the main flow path 611A and the distribution flow paths 611B.

The detection of the abnormality related to the diaphragm 57 by the partition wall abnormality detection system 10 can be performed in a timely manner except during the closing operation (or during the opening operation or during both the closing operation and the opening operation) of the closing device 50. The detection of the abnormality related to the diaphragm 57 is performed by exciting the supply and discharge valve 612 to supply the air, which has passed through the first port 612A and the second port 612B, to the closed space 570 through the pipe line 611.

The detection of the abnormality related to the diaphragm 57 can be performed not only during the maintenance of the aseptic filling system 1 but also during a product production process by the aseptic filling system 1 and a cleaning and sterilization process. The rotating body 31 may be rotated when the abnormality is detected. It is preferable that the pressure of the air supplied to the closed space 570 of the diaphragm 57 is set to be lower than the pressure to displace the lid 542 so as not to affect the closing of the discharge portion 45 by the lid 542 during the cleaning and sterilization process.

When the flow rate and pressure of air are continuously measured during an operation including the production process and the cleaning and sterilization process, it is possible to quickly take measures, such as inspection and replacement of the diaphragm 57, against the occurrence of the abnormality related to the diaphragm 57, which is preferable.

### [Main Effects of This Embodiment]

As described above, according to the partition wall abnormality detection system 10 of this embodiment that detects the abnormality related to the diaphragm 57 on the basis of the state of air supplied to the closed space 570 of each closing device 50, it is possible to detect abnormalities related to a large number of diaphragms 57 provided in the aseptic filling system 1 at once even during the operation of the aseptic filling system 1 without disassembling the closing devices 50.

According to this embodiment, only in a case where the abnormality related to the diaphragm 57 is detected, it is sufficient to disassemble the closing device 50 in order to inspect whether or not the diaphragm 57 is damaged. Therefore, it is possible to easily prevent human errors and to reliably detect abnormalities while significantly reducing the effort and time required for the operation of disassembling all of the closing devices 50 one by one, inspecting the diaphragms 57, replacing the diaphragms 57 with good ones as necessary, and reassembling the closing devices 50 during maintenance. Therefore, it is possible to reduce the maintenance cost of the aseptic filling system 1 and to improve productivity. In addition, the diaphragm 57 is replaced on the basis of the detection result of the abnormality related to the diaphragm 57 such that the diaphragm 57 is kept normal. As a result, the sterilization of the aseptic region R1 is promoted, and it is possible to contribute to the improvement of the non-defective rate of the products.

### [Modification Examples]

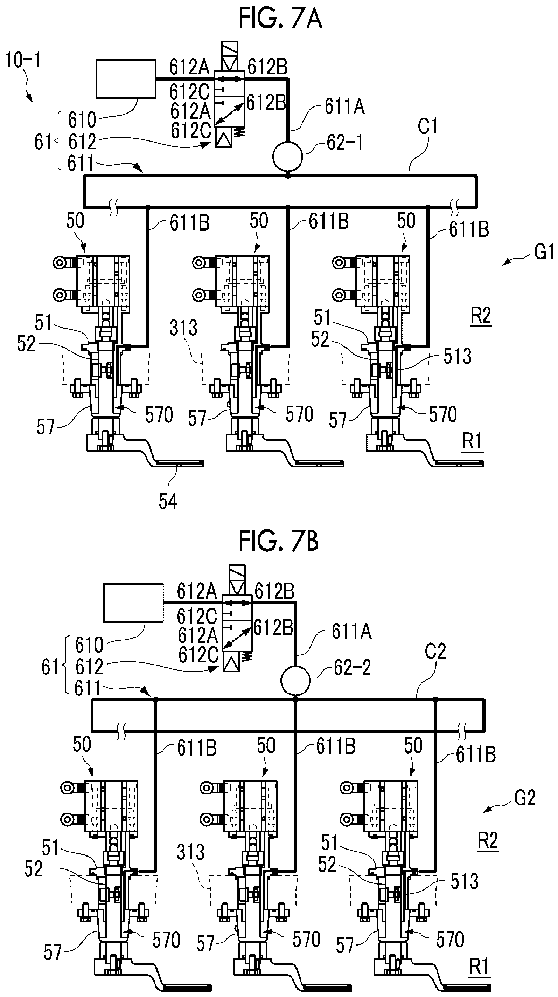

Figs. 7A and 7B show a state in which a plurality of closing devices 50 provided in the aseptic filling system 1 are divided into a plurality of groups G1 and G2. A partition wall abnormality detection system 10-1 shown in Fig. 7 includes a first air circuit C1, a first flow meter 62-1 that is provided in the first air circuit C1, a second air circuit C2, and a second flow meter 62-2 that is provided in the second air circuit C2. For example, the first air circuit C1 corresponding to the first group G1 is connected to half of the closing devices 50. The second air circuit C2 corresponding to the second group G2 is connected to the remaining closing devices 50.

According to the partition wall abnormality detection system 10-1, in a case where the abnormality of the diaphragm 57 is detected in either of the first group G1 or the second group G2, the portion where the abnormality has occurred is narrowed down to some of the closing devices 50. Therefore, it is easy to specify the closing device 50 in which the abnormality has occurred.

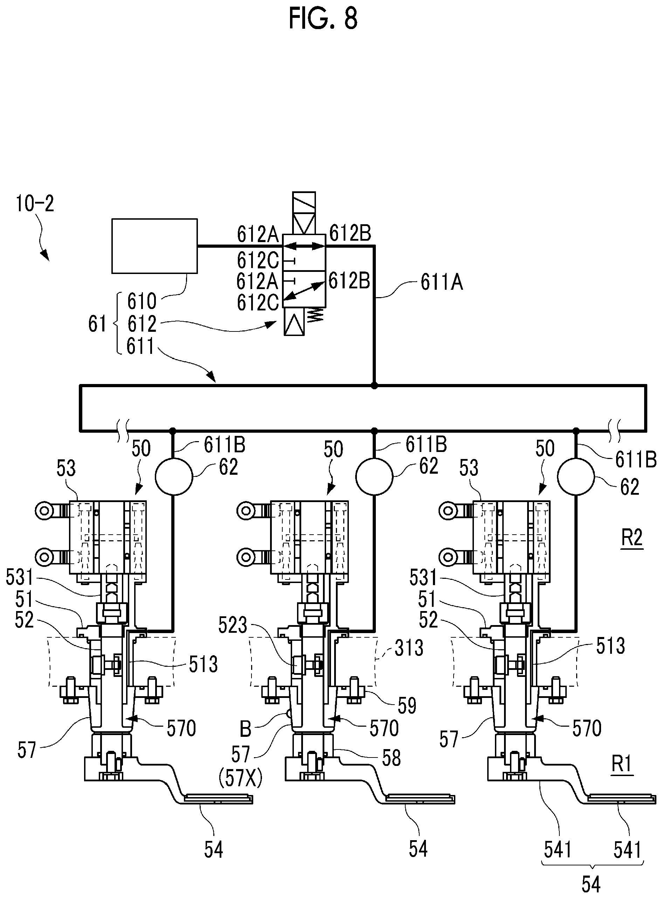

A partition wall abnormality detection system 10-2 shown in Fig. 8 includes the flow meters 62 (or pressure sensors) individually corresponding to a plurality of closing devices 50 in the distribution flow paths 611B. According to the partition wall abnormality detection system 10-2, it is possible to determine a difference in the flow rate (or pressure) of air caused by the presence or absence of air leakage from the corresponding closed space 570 on the basis of the measured values indicated by the flow meters 62 individually corresponding to the closing devices 50 while supplying air to the closed spaces 570 of all of the closing devices 50 at the same time. Therefore, it is possible to easily specify the closing device 50 in which an abnormality has occurred in the diaphragm 57.

In the above-described embodiment, before the step of supplying air to the closed space 570, a step of applying a detection liquid (for example, soapy water) to the diaphragm 57 from the outside can be performed. Then, in a case where there is an abnormality, air bubbles B are generated in a portion in which air is leaking due to damage or the like as in the diaphragm 57X shown in Fig. 5 by the execution of the step of supplying air as the gas-phase fluid to the closed space 570. Air is contained in the detection liquid to generate the air bubbles B.

The air bubbles B appearing outside the diaphragm 57 show that the abnormality related to the diaphragm 57 has occurred. Therefore, the diaphragm 57 in which the abnormality has occurred can be specified by, for example, visually checking the air bubbles B. That is, the abnormality is detected on the basis of the state of air indicated by the air bubbles.

In addition to the soapy water, a liquid having a smaller surface tension than water, such as a liquid including alcohol, can be used as the detection liquid.

In addition, the abnormality related to the diaphragm 57 is notified by a sound generated due to the leakage of the air supplied to the closed space 570 from the closed space 570 even though the detection liquid generating the air bubbles B is not necessarily used. Therefore, it is possible to specify the diaphragm 57 in which the abnormality has occurred on the basis of the sound.

In addition, the bellows 47 of the filling valve 40 (first-type functional unit) shown in Fig. 3 forms the closed space 470 together with the surrounding members, similarly to the diaphragm 57 of the closing device 50 (first-type functional unit). The closed space 470 corresponds to a space surrounded by the bellows 47, the valve stem 42, the rod 48, and the housing 41.

A partition wall abnormality detection system that detects an abnormality related to the bellows 47 can be constructed by replacing the closing device 50 shown in Fig. 5 with the filling valve 40. That is, as shown in Fig. 3, the distribution flow path 611B (represented by a one-dot chain line) may be connected to each filling valve 40. The end of the distribution flow path 611B corresponds to a passage 413 that is formed in the housing 41.

The description of the operation and effect in a case where the closing device 50 shown in Fig. 5 is replaced with the filling valve 40 will be omitted because it is the same as that in a case where the abnormality related to the diaphragm 57 is detected. The detection of the abnormality related to the bellows 47 can be performed during the cleaning and sterilization process in which the filling valve 40 is not operated or during the maintenance of the filling machine 3. In addition, the closed space 470 in the bellows 47 is open to the atmosphere through the distribution flow path 611B, the main flow path 611A, and the third port 612C of the supply and discharge valve 612.

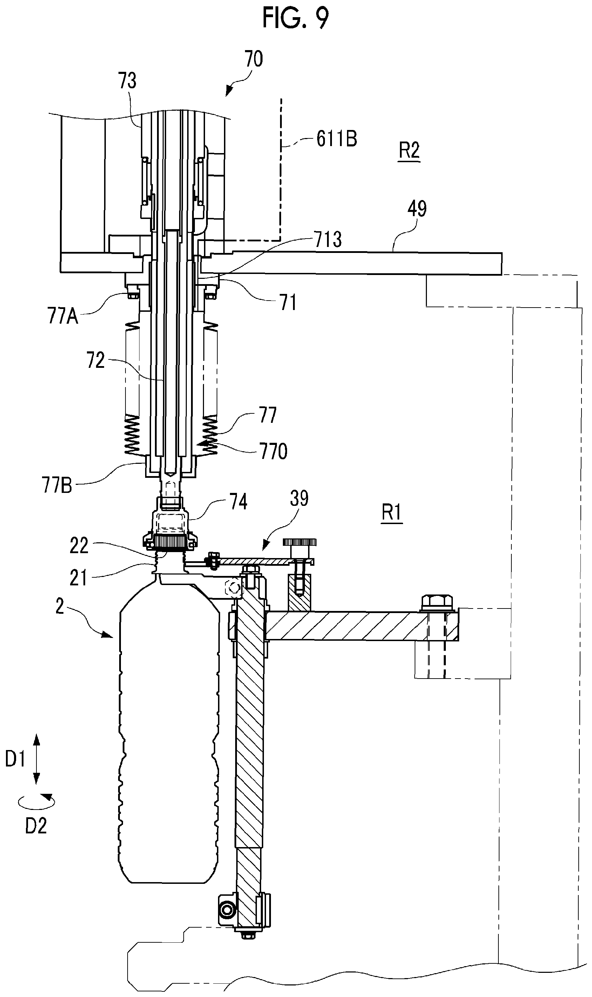

Then, it is also possible to construct a system that detects an abnormality related to a bellows 77 provided in a capping head 70 (third-type functional unit) shown in Fig. 9.

The capping head 70 is provided in the capper 4 (Fig. 1) that receives the container 2 from the filling machine 3 (Fig. 1) and attaches a cap 22 to the mouth portion 21 of the container 2.

As shown in Fig. 9, the capping head 70 includes a cylindrical housing 71 that is supported by a base plate 49 partitioning the aseptic region R1 from the non-aseptic region R2, a movable shaft portion 72 that can be displaced in the axial direction D1 and the axial rotation direction D2 with respect to the housing 71, a driving mechanism 73 that drives the movable shaft portion 72 in the axial direction D1 and the axial rotation direction D2, an attachment portion 74 that is provided in a lower end portion of the movable shaft portion 72 and tightens the cap 22 on the container 2 in operative association with the displacement of the movable shaft portion 72, and the bellows 77 that is disposed around the axis of the movable shaft portion 72 and separates the aseptic region R1 from the non-aseptic region R2.

An upper end portion 77A of the bellows 77 is held by the housing 71. A lower end portion 77B of the bellows 77 is held by the movable shaft portion 72. The bellows 77 seals between the housing 71 and the movable shaft portion 72 while allowing the displacement of the movable shaft portion 72 with respect to the housing 71 in the axial direction D1 and the axial rotation direction D2. In addition, the bellows 77 forms a closed space 770 together with the housing 71 and the movable shaft portion 72.

A partition wall abnormality detection system that detects the abnormality related to the bellows 77 can be constructed by replacing the closing device 50 shown in Fig. 5 with the capping head 70. That is, as shown in Fig. 9, the distribution flow path 611B (represented by a one-dot chain line) may be connected to each capping head 70. The end of the distribution flow path 611B corresponds to a passage 713 that is formed in the housing 71. The closed space 770 is open to the atmosphere through the distribution flow path 611B, the main flow path 611A, and the third port 612C of the supply and discharge valve 612.

The detection of the abnormality related to the bellows 77 can be performed during the cleaning and sterilization process in which the capping head 70 is not operated or during maintenance.

The detection medium is not limited to the air supplied from the supply source 610 of the compressed air, and a liquid-phase fluid (water or the like) as the detection medium can be supplied to the closed space 570. In this case, for example, an appropriate threshold value can be applied to the flow rate of the liquid measured by the flow meter 62 provided in the main flow path 611A to detect that an abnormality has occurred in the diaphragm 57 of any of the closing devices 50. In addition, the abnormality is notified by the dropping of the liquid from the portion in which the damage of the diaphragm 57 or the like has occurred. Therefore, it is possible to specify the diaphragm 57 in which the abnormality has occurred.

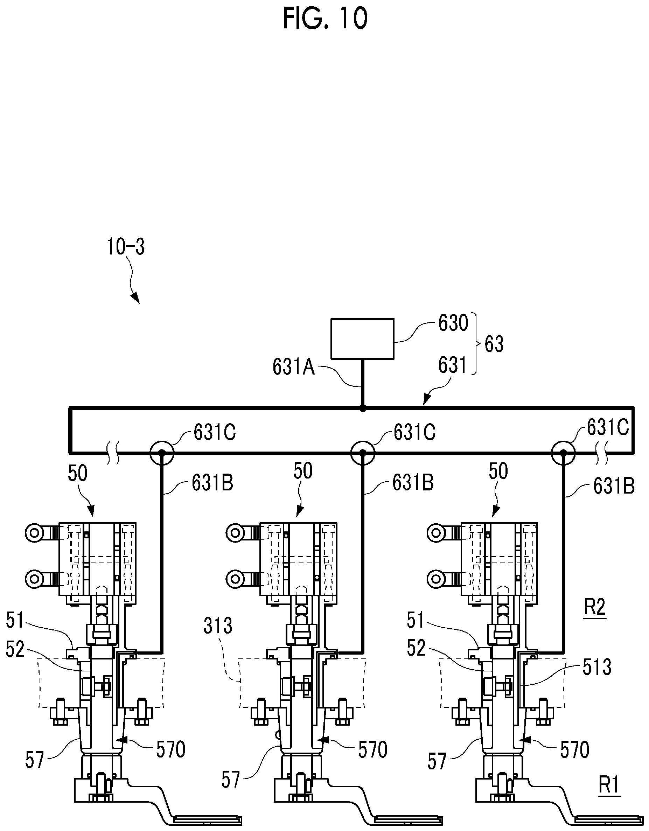

Further, as shown in Fig. 10, light as the detection medium can also be supplied to the closed space 570. For example, a partition wall abnormality detection system 10-3 shown in Fig. 10 includes, as the medium supply unit 63, a light source device 630 and a light guide path 631 that is made of an optical fiber or the like.

The light guide path 631 includes a main light guide path 631A corresponding to the main flow path 611A shown in Fig. 5, a distribution light guide path 631B corresponding to the distribution flow path 611B, and an optical splitter 631C that branches light from the main light guide path 631A to the distribution light guide path 631B and transmits the light supplied from the light source device 630 to the closed space 570.

Here, the diaphragm 57 is made of a resin material or the like that does not transmit light. Therefore, only in a case where the diaphragm 57 is broken or a gap is formed between the diaphragm 57 and a member due to an installation failure or the like, light leaks from the closed space 570. That is, the occurrence of the abnormality related to the diaphragm 57 is notified by the light.

Therefore, light may be supplied to the closed space 570 through the light guide path 631 by the light source device 630, and the light leaking from the diaphragm 57 may be visually checked or detected using an optical sensor, camera, or the like in a state in which lights in a manufacturing site are turned off as necessary. The abnormalities related to all of the diaphragms 57 can be detected by a plurality of optical sensors or the like that are distributed in the circumferential direction of the rotating body 31 (Fig. 2). Alternatively, even when only one optical sensor or the like is used, the rotating body 31 can be rotated to detect the abnormalities related to all of the diaphragms 57.

Further, as in the example shown in Fig. 7, the light guide paths 631 can be divided into a plurality of groups G1 and G2, which makes it possible to narrow down the diaphragms 57 in which an abnormality has occurred.

Instead of transmitting light to the closed space 570 with the light guide path 631 made of an optical fiber or the like, a current may be supplied to a lighting device, such as a light emitting diode (LED), that is disposed in the closed space 570 through an electric path. The lighting device may be a built-in battery type. In any case, since light as the detection medium is supplied to the closed space 570, it is possible to detect an abnormality on the basis of the light leaking from the closed space 570.

The above-described configuration in which light is used as the detection medium can be applied not only to the closing device 50 but also to the filling valve 40 and the capping head 70.

In order to detect an abnormality related to at least one of the first-type to third-type functional units (40, 50, and 70), it is sufficient that the partition wall abnormality detection system according to the present disclosure includes a medium supply unit connected to the functional unit.

In addition to the above, it is possible to select the configurations described in the embodiment or to change the configurations to other configurations as appropriate, as long as the changed configuration falls within the scope of the invention as defined in the appended claims.

### Reference Signs List

1 Aseptic filling system
1M Control device
2 Container
3 Filling machine
4 Capper
5 Filling device
6 Container supply unit
7 Discharge unit
8 Chamber member
9 Air supply unit
10, 10-1, 10-2, 10-3 Partition wall abnormality detection system
11 to 13, 14 to 16, 31 Rotating body
18 Airtight shutter
19 Conveyor
21 Mouth portion
22 Cap
31 Rotating body
32 Liquid supply pipe
33 Rotary joint
34 Upper water seal
35 Lower water seal
36 Bearing
37 Driving device
38 Gear
39 Gripper
40 Filling valve
41 Housing
42 Valve stem (movable shaft portion)
43 Driving mechanism
44 Valve seat
45 Discharge portion
46 Valve body
47 Bellows (partition wall)
48 Rod (movable shaft portion)
49 Base plate
50 Closing device
51 Housing
51A Upper end portion
52 Movable shaft portion
52X Axis
53 Driving mechanism
54 Closing portion
57, 57X Diaphragm (partition wall)
58 First holding portion
59 Second holding portion
61 Medium supply unit
62 Flow meter (measurement unit)
63 Medium supply unit
70 Capping head
71 Housing
72 Movable shaft portion
73 Driving mechanism
74 Attachment portion
77 Bellows (partition wall)
77A Upper end portion
77B Lower end portion
100 Work table
311 Canopy
312 Side plate
313 Base plate
314 Body
361 Outer ring
410 Flow path
410A Holding portion
411 Liquid introduction portion
412 Nozzle
413 Passage
414 Flange
431 Cylinder
470 Closed space
510 Insertion hole
511 Flange
511A Second seal ring
512 Cam groove
512A First section
512B Second section
513 Passage
513A Opening
513B Opening
521 Flange
522 Connection portion
522A First seal ring
523 Cam follower
531 Output shaft
541 Fastening portion
541A Bolt
541B Key
542 Lid
570 Closed space
571 Opening
572 Bottom portion
573 Side wall
573A Seal portion
591 Bolt
610 Supply source
611 Pipe line
611A Main flow path
611B Distribution flow path
612 Supply and discharge valve
612A First port
612B Second port
612C Third port
630 Light source device
631 Light guide path
631A Main light guide path
631B Distribution light guide path
631C Optical splitter
713 Passage
770 Closed space
B Air bubbles
C1 First air circuit
C2 Second air circuit
D1 Axial direction
D2 Axial rotation direction
G1 First group
G2 Second group
P Allowable range
R1 Aseptic region
R2 Non-aseptic region
X Axis
p₁ Prescribed pressure
t₀ Start time of air supply

## Claims

1. A partition wall abnormality detection system (10) for aseptic filling comprising:
an aseptic region (R1) in which a discharge portion (45) of each of a plurality of filling valves (40) provided in a filling machine (3) that is configured to fill each container with contents while transporting a container group is located;
a non-aseptic region (R2) around the aseptic region;
at least one type of functional unit selected from a plurality of first-type functional units individually corresponding to the plurality of filling valves (40), a plurality of second-type functional units individually included in the plurality of filling valves, and a plurality of third-type functional units corresponding to a plurality of capping heads (70) provided in a capper (4) that is configured to attach a cap (22) to each container while transporting the container group filled with the contents; and
a medium supply unit (61) configured to supply a detection medium used for detecting an abnormality related to a partition wall, which is included in the functional unit and separates the aseptic region from the non-aseptic region, to the plurality of functional units,
wherein the functional unit includes a movable shaft portion (42) that is displaceable at least in an axial direction and the partition wall that is configured to seal between the movable shaft portion and a support portion disposed around an axis of the movable shaft portion while allowing displacement of the movable shaft portion with respect to the support portion, and
a closed space (470) formed by the partition wall, the support portion, and the movable shaft portion is configured to hold the detection medium to be supplied by the medium supply unit in a case where the abnormality does not occur and is configured to leak the detection medium in a case where the abnormality occurs.

2. The partition wall abnormality detection system for aseptic filling according to claim 1, further comprising:
a measurement unit (62) that is capable of measuring a flow rate or pressure of a fluid as the detection medium supplied to the closed space by the medium supply unit.

3. The partition wall abnormality detection system for aseptic filling according to claim 2,
wherein the medium supply unit includes a main flow path (410) through which the fluid supplied from a supply source of the fluid can flow and a plurality of distribution flow paths through which the fluid distributed from the main flow path to the closed space of each of the plurality of functional units can flow, and
the flow rate or pressure of the fluid flowing through the main flow path is capable of being measured by the measurement unit provided in the main flow path, or the flow rate or pressure of the fluid flowing through each of the plurality of distribution flow paths is capable of being measured by the measurement units individually provided in the plurality of distribution flow paths.

4. The partition wall abnormality detection system for aseptic filling according to claim 2 or 3,
wherein the medium supply unit includes a supply and discharge valve (612) that is capable of switching between a supply of the fluid to the closed space and a discharge of the fluid from the closed space.

5. The partition wall abnormality detection system for aseptic filling according to claim **1,**
wherein the medium supply unit includes a light guide path (631) that is configured to supply light supplied from a light source as the detection medium to the closed space.

6. The partition wall abnormality detection system for aseptic filling according to any one of claims 1 to 5,
wherein a plurality of said first-type functional units are provided,
the movable shaft portion is configured to be displaceable in an axial rotation direction as well as in the axial direction, and
the first-type functional unit includes a closing portion that is configured to close the discharge portion in operative association with the displacement of the movable shaft portion.

7. The partition wall abnormality detection system for aseptic filling according to any one of claims 1 to 6,
wherein a plurality of said second-type functional units are provided, and
the second-type functional unit includes a valve stem (42) as the movable shaft portion and a valve body (46) that is provided in the valve stem and that is configured to open and close the discharge portion.

8. The partition wall abnormality detection system for aseptic filling according to any one of claims 1 to 7,
wherein a plurality of said third-type functional units are provided,
the movable shaft portion is configured to be displaceable in an axial rotation direction as well as in the axial direction, and
the third-type functional unit includes an attachment portion (74) that is configured to attach the cap to the container in operative association with the displacement of the movable shaft portion.

9. A partition wall abnormality detection method for aseptic filling for detecting an abnormality related to a partition wall (57) included in a functional unit for aseptic filling, the functional unit corresponding to at least one type selected from a plurality of first-type functional units individually corresponding to a plurality of filling valves (40), a plurality of second-type functional units individually included in the plurality of filling valves, and a plurality of third-type functional units corresponding to a plurality of capping heads (70) provided in a capper (4) that attaches a cap (22) to each container while transporting a container group filled with contents, the functional unit including a movable shaft portion (42) that is displaceable at least in an axial direction and the partition wall that seals between the movable shaft portion and a support portion disposed around an axis (52X) of the movable shaft portion while allowing displacement of the movable shaft portion with respect to the support portion, the partition wall separating an aseptic region, in which a discharge portion (45) of each of a plurality of filling valves provided in a filling machine (3) that fills each container with the contents while transporting the container group is located, from a non-aseptic region (R2) around the aseptic region (R1), the partition wall abnormality detection method for aseptic filling comprising:
a supply step of supplying a detection medium used for detecting the abnormality to the plurality of functional units; and
a detection step of detecting the abnormality related to the partition wall on the basis of a state of the detection medium supplied to the plurality of functional units,
wherein, in the supply step, a closed space (470) formed by the partition wall, the support portion, and the movable shaft portion holds the detection medium in a case where the abnormality does not occur and leaks the detection medium in a case where the abnormality occurs.

10. The partition wall abnormality detection method for aseptic filling according to claim 9, further comprising:
a measurement step of measuring a flow rate or pressure of a fluid as the detection medium supplied to the closed space,
wherein, in the detection step, the abnormality is detected on the basis of the flow rate or the pressure.

11. The partition wall abnormality detection method for aseptic filling according to claim 9 or 10, further comprising:
a step of applying a detection liquid to the partition wall from an outside before the supply step,
wherein, in the supply step, a gas-phase fluid is supplied as the detection medium to the closed space,
in a case where the abnormality occurs with execution of the supply step, leakage of the detection medium from the closed space is notified by generation of air bubbles derived from the detection liquid, and
in the detection step, the abnormality is detected on the basis of a state of the detection medium indicated by the air bubbles.

12. A method for producing an aseptic filling system (1) including a partition wall abnormality detection system, the method comprising:
giving, to an existing aseptic filling system (1) including an aseptic region (R1) in which a discharge portion (45) of each of a plurality of filling valves (40) provided in a filling machine that fills each container with contents while transporting a container group is located, a non-aseptic region (R2) around the aseptic region (R1), and at least one type of functional unit selected from a plurality of first-type functional units individually corresponding to the plurality of filling valves (40), a plurality of second-type functional units individually included in the plurality of filling valves (40), and a plurality of third-type functional units corresponding to a plurality of capping heads (70) provided in a capper (4) that attaches a cap (22) to each container while transporting the container group filled with the contents, a medium supply unit configured to supply a detection medium used for detecting an abnormality related to a partition wall (57), which is included in the functional unit and separates the aseptic region (R1) from the non-aseptic region (R2), to the plurality of functional units,
wherein the functional unit includes a movable shaft portion (42) that is displaceable at least in an axial direction (D1) and the partition wall that seals between the movable shaft portion and a support portion disposed around an axis of the movable shaft portion while allowing displacement of the movable shaft portion with respect to the support portion, and
a closed space (470) formed by the partition wall, the support portion, and the movable shaft portion holds the detection medium supplied by the medium supply unit in a case where the abnormality does not occur and leaks the detection medium in a case where the abnormality occurs.

## Patentansprüche

1. Trennwand-Anomalieerkennungssystem (10) für aseptisches Füllen, umfassend:
einen aseptischen Bereich (R1), in dem ein Auslassabschnitt (45) jedes einer Vielzahl von Füllventilen (40), die in einer Füllmaschine (3) bereitgestellt sind, die ausgebildet ist, während des Transports einer Behältergruppe jeden Behälter mit Inhalt zu füllen, angeordnet ist;
einen nicht-aseptischen Bereich (R2) um den aseptischen Bereich herum;
mindestens einen Typ von Funktionseinheit, ausgewählt aus einer Vielzahl von Funktionseinheiten des ersten Typs, die jeweils der Vielzahl von Füllventilen (40) entsprechen, einer Vielzahl von Funktionseinheiten des zweiten Typs, die jeweils in der Vielzahl von Füllventilen eingeschlossen sind, und einer Vielzahl von Funktionseinheiten des dritten Typs, die einer Vielzahl von Verschließköpfen (70) entsprechen, die in einer Verschließmaschine (4) bereitgestellt sind, die ausgebildet ist, während des Transports der mit dem Inhalt gefüllten Behältergruppe die Kappe (22) an jeden Behälter anzubringen; und
eine Mediumversorgungseinheit (61), die ausgebildet ist, ein Erkennungsmedium, das zum Erkennen einer Anomalie in Zusammenhang mit einer Trennwand verwendet wird, die in der Funktionseinheit eingeschlossen ist und den aseptischen Bereich von dem nicht-aseptischen Bereich trennt, zu der Vielzahl von Funktionseinheiten zuzuführen,
wobei die Funktionseinheit einen beweglichen Wellenabschnitt (42), der zumindest in einer axialen Richtung versetzbar ist, und die Trennwand einschließt, die ausgebildet ist, zwischen dem beweglichen Wellenabschnitt und einem um eine Achse des beweglichen Wellenabschnitts angeordneten Stützabschnitt abzudichten, während sie eine Versetzung des beweglichen Wellenabschnitts relativ zu dem Stützabschnitt zulässt, und
ein geschlossener Raum (470), der durch die Trennwand, den Stützabschnitt und den beweglichen Wellenabschnitt gebildet ist, ausgebildet ist, in einem Fall, in dem die Anomalie nicht auftritt, das durch die Mediumversorgungseinheit zuzuführende Erkennungsmedium zu halten, und ausgebildet ist, in einem Fall, in dem die Anomalie auftritt, das Erkennungsmedium austreten zu lassen.

2. Trennwand-Anomalieerkennungssystem für aseptisches Füllen nach Anspruch 1, weiter umfassend:
eine Messeinheit (62), die fähig ist, eine Durchflussrate oder einen Druck eines Fluids als das Erkennungsmedium, das durch die Mediumversorgungseinheit zu dem geschlossenen Raum zugeführt wird, zu messen.

3. Trennwand-Anomalieerkennungssystem für aseptisches Füllen nach Anspruch 2,
wobei die Mediumversorgungseinheit einen Hauptdurchflussweg (410), durch den das von einer Versorgungsquelle des Fluids zugeführte Fluid strömen kann, und eine Vielzahl von Verteildurchflusswegen einschließt, durch die das von dem Hauptdurchflussweg zu dem geschlossenen Raum jeder der Vielzahl von Funktionseinheiten verteilte Fluid strömen kann, und
die Durchflussrate oder der Druck des durch den Hauptdurchflussweg strömenden Fluids durch die in dem Hauptdurchflussweg bereitgestellte Messeinheit gemessen werden kann, oder die Durchflussrate oder der Druck des durch jeden der Vielzahl von Verteildurchflusswegen strömenden Fluids durch die in der Vielzahl von Verteildurchflusswegen jeweils bereitgestellten Messeinheiten gemessen werden kann.

4. Trennwand-Anomalieerkennungssystem für aseptisches Füllen nach Anspruch 2 oder 3,
wobei die Mediumversorgungseinheit ein Zufuhr- und Ablassventil (612) einschließt, das fähig ist, zwischen einer Zufuhr des Fluids zu dem geschlossenen Raum und einem Ablassen des Fluids aus dem geschlossenen Raum umzuschalten.

5. Trennwand-Anomalieerkennungssystem für aseptisches Füllen nach Anspruch 1,
wobei die Mediumversorgungseinheit einen Lichtleitweg (631) einschließt, der ausgebildet ist, von einer Lichtquelle zugeführtes Licht als das Erkennungsmedium zu dem geschlossenen Raum zuzuführen.

6. Trennwand-Anomalieerkennungssystem für aseptisches Füllen nach einem der Ansprüche 1 bis 5,
wobei eine Vielzahl der Funktionseinheiten des ersten Typs bereitgestellt ist, der bewegliche Wellenabschnitt ausgebildet ist, in einer axialen Drehrichtung sowie in der axialen Richtung versetzbar zu sein, und
die Funktionseinheit des ersten Typs einen Schließabschnitt einschließt, der ausgebildet ist, den Auslassabschnitt in funktionaler Verbindung mit der Versetzung des beweglichen Wellenabschnitts zu schließen.

7. Trennwand-Anomalieerkennungssystem für aseptisches Füllen nach einem der Ansprüche 1 bis 6,
wobei eine Vielzahl der Funktionseinheiten des zweiten Typs bereitgestellt ist, und
die Funktionseinheit des zweiten Typs einen Ventilschaft (42) als den beweglichen Wellenabschnitt und einen Ventilkörper (46) einschließt, der in dem Ventilschaft bereitgestellt ist und der ausgebildet ist, den Auslassabschnitt zu öffnen und zu schließen.

8. Trennwand-Anomalieerkennungssystem für aseptisches Füllen nach einem der Ansprüche 1 bis 7,
wobei eine Vielzahl der Funktionseinheiten des dritten Typs bereitgestellt ist,
der bewegliche Wellenabschnitt ausgebildet ist, in einer axialen Drehrichtung sowie in der axialen Richtung versetzbar zu sein, und
die Funktionseinheit des dritten Typs einen Befestigungsabschnitt (74) einschließt, der ausgebildet ist, die Kappe an dem Behälter in funktionaler Verbindung mit der Versetzung des beweglichen Wellenabschnitts zu befestigen.

9. Trennwand-Anomalieerkennungsverfahren für aseptisches Füllen zum Erkennen einer Anomalie in Zusammenhang mit einer Trennwand (57), die in einer Funktionseinheit für aseptisches Füllen eingeschlossen ist, wobei die Funktionseinheit mindestens einem Typ ausgewählt aus einer Vielzahl von Funktionseinheiten des ersten Typs, die jeweils einer Vielzahl von Füllventilen (40) entsprechen, einer Vielzahl von Funktionseinheiten des zweiten Typs, die jeweils in der Vielzahl von Füllventilen eingeschlossen sind, und einer Vielzahl von Funktionseinheiten des dritten Typs, die einer Vielzahl von Verschließköpfen (70) entsprechen, die in einer Verschließmaschine (4) bereitgestellt sind, die ausgebildet ist, während des Transports einer mit Inhalt gefüllten Behältergruppe die Kappe (22) an jeden Behälter anzubringen, entspricht, die Funktionseinheit einen beweglichen Wellenabschnitt (42) einschließend, der zumindest in einer axialen Richtung versetzbar ist, und die Trennwand, die zwischen dem beweglichen Wellenabschnitt und einem um eine Achse (52X) des beweglichen Wellenabschnitts angeordneten Stützabschnitt abdichtet, während sie eine Versetzung des beweglichen Wellenabschnitts relativ zu dem Stützabschnitt zulässt, wobei die Trennwand einen aseptischen Bereich, in dem ein Auslassabschnitt (45) jedes einer Vielzahl von Füllventilen, die in einer Füllmaschine (3) bereitgestellt sind, die jeden Behälter mit dem Inhalt füllt, während die Behältergruppe transportiert wird, angeordnet ist, von einem nicht-aseptischen Bereich (R2) um den aseptischen Bereich (R1) herum trennt, wobei das Trennwand-Anomalieerkennungsverfahren für aseptisches Füllen Folgendes umfasst:
einen Zufuhrschritt des Zuführens eines Erkennungsmediums, das zum Erkennen der Anomalie verwendet wird, zu der Vielzahl von Funktionseinheiten; und
einen Erkennungsschritt des Erkennens der Anomalie in Zusammenhang mit der Trennwand auf der Grundlage eines Zustands des zu der Vielzahl von Funktionseinheiten zugeführten Erkennungsmediums,
wobei, in dem Zufuhrschritt, ein geschlossener Raum (470), der durch die Trennwand, den Stützabschnitt und den beweglichen Wellenabschnitt gebildet ist, in einem Fall, in dem die Anomalie nicht auftritt, das Erkennungsmedium hält und in einem Fall, in dem die Anomalie auftritt, das Erkennungsmedium austreten lässt.

10. Trennwand-Anomalieerkennungsverfahren für aseptisches Füllen nach Anspruch 9, weiter umfassend:
einen Messschritt des Messens einer Durchflussrate oder eines Drucks eines Fluids als das Erkennungsmedium, das zu dem geschlossenen Raum zugeführt wird,
wobei, in dem Erkennungsschritt, die Anomalie auf der Grundlage der Durchflussrate oder des Drucks erkannt wird.

11. Trennwand-Anomalieerkennungsverfahren für aseptisches Füllen nach Anspruch 9 oder 10, weiter umfassend:
einen Schritt des Aufbringens einer Erkennungsflüssigkeit von außerhalb auf die Trennwand vor dem Zufuhrschritt,
wobei, in dem Zufuhrschritt, ein gasförmiges Fluid als das Erkennungsmedium zu dem geschlossenen Raum zugeführt wird,
in einem Fall, in dem die Anomalie bei Ausführung des Zufuhrschritts auftritt, eine Leckage des Erkennungsmediums aus dem geschlossenen Raum durch Erzeugung von Luftblasen, die aus der Erkennungsflüssigkeit stammen, angezeigt wird, und
in dem Erkennungsschritt, die Anomalie auf der Grundlage eines Zustands des Erkennungsmediums, der durch die Luftblasen angezeigt wird, erkannt wird.

12. Verfahren zur Herstellung eines aseptischen Füllsystems (1), das ein Trennwand-Anomalieerkennungssystem einschließt, wobei das Verfahren Folgendes umfasst:
Geben, an ein bestehendes aseptisches Füllsystem (1), das einen aseptischen Bereich (R1), in dem ein Auslassabschnitt (45) jedes einer Vielzahl von Füllventilen (40), die in einer Füllmaschine bereitgestellt sind, die jeden Behälter mit Inhalt füllt, während eine Behältergruppe transportiert wird, angeordnet ist, einen nicht-aseptischen Bereich (R2) um den aseptischen Bereich (R1) herum, und mindestens einen Typ von Funktionseinheit, ausgewählt aus einer Vielzahl von Funktionseinheiten des ersten Typs, die jeweils der Vielzahl von Füllventilen (40) entsprechen, einer Vielzahl von Funktionseinheiten des zweiten Typs, die jeweils in der Vielzahl von Füllventilen (40) eingeschlossen sind, und einer Vielzahl von Funktionseinheiten des dritten Typs, die einer Vielzahl von Verschließköpfen (70) entsprechen, die in einer Verschließmaschine (4) bereitgestellt sind, die die Kappe (22) an jeden Behälter anbringt, während des Transports der mit dem Inhalt gefüllten Behältergruppe, einschließt, eine Mediumversorgungseinheit, die ausgebildet ist, ein Erkennungsmedium, das zum Erkennen einer Anomalie in Zusammenhang mit einer Trennwand (57) verwendet wird, die in der Funktionseinheit eingeschlossen ist und den aseptischen Bereich (R1) von dem nicht-aseptischen Bereich (R2) trennt, zu der Vielzahl von Funktionseinheiten zuzuführen,
wobei die Funktionseinheit einen beweglichen Wellenabschnitt (42), der zumindest in einer axialen Richtung (D1) versetzbar ist, und die Trennwand einschließt, die zwischen dem beweglichen Wellenabschnitt und einem um eine Achse des beweglichen Wellenabschnitts angeordneten Stützabschnitt abdichtet, während sie eine Versetzung des beweglichen Wellenabschnitts relativ zu dem Stützabschnitt zulässt, und
ein geschlossener Raum (470), der durch die Trennwand, den Stützabschnitt und den beweglichen Wellenabschnitt gebildet ist, in einem Fall, in dem die Anomalie nicht auftritt, das durch die Mediumversorgungseinheit zugeführte Erkennungsmedium hält und in einem Fall, in dem die Anomalie auftritt, das Erkennungsmedium austreten lässt.

## Revendications

1. Système (10) de détection d'anomalie de paroi de séparation pour remplissage aseptique comprenant :
une région aseptique (R1) dans laquelle est située une partie d'évacuation (45) de chacune d'une pluralité de vannes de remplissage (40) disposées dans une machine de remplissage (3) qui est configurée pour remplir chaque récipient avec un contenu tout en transportant un groupe de récipients ;
une région non aseptique (R2) autour de la région aseptique ;
au moins un type d'unité fonctionnelle sélectionné parmi une pluralité d'unités fonctionnelles de premier type correspondant individuellement à la pluralité de vannes de remplissage (40), une pluralité d'unités fonctionnelles de deuxième type incluses individuellement dans la pluralité de vannes de remplissage, et une pluralité d'unités fonctionnelles de troisième type correspondant à une pluralité de têtes de bouchage (70) disposées dans une boucheuse (4) qui est configurée pour fixer un bouchon (22) sur chaque récipient tout en transportant le groupe de récipients remplis avec le contenu ; et
une unité d'alimentation en milieu (61) configurée pour fournir un milieu de détection utilisé pour détecter une anomalie liée à une paroi de séparation, qui est incluse dans l'unité fonctionnelle et sépare la région aseptique de la région non aseptique, à la pluralité d'unités fonctionnelles,
dans lequel l'unité fonctionnelle inclut une partie arbre mobile (42) qui est déplaçable au moins dans une direction axiale et la paroi de séparation qui est configurée pour assurer l'étanchéité entre la partie arbre mobile et une partie support disposée autour d'un axe de la partie arbre mobile tout en permettant le déplacement de la partie arbre mobile par rapport à la partie support, et
un espace clos (470) formé par la paroi de séparation, la partie support et la partie arbre mobile est configuré pour retenir le milieu de détection devant être fourni par l'unité d'alimentation en milieu dans un cas où l'anomalie ne se produit pas et est configuré pour laisser fuir le milieu de détection dans un cas où l'anomalie se produit.

2. Système de détection d'anomalie de paroi de séparation pour remplissage aseptique selon la revendication 1, comprenant en outre :
une unité de mesure (62) qui est apte à mesurer un débit ou une pression d'un fluide en tant que milieu de détection fourni à l'espace clos par l'unité d'alimentation en milieu.

3. Système de détection d'anomalie de paroi de séparation pour remplissage aseptique selon la revendication 2,
dans lequel l'unité d'alimentation en milieu inclut un canal d'écoulement principal (410) à travers lequel le fluide fourni depuis une source d'alimentation du fluide peut s'écouler et une pluralité de canaux d'écoulement de distribution à travers lesquels le fluide distribué depuis le canal d'écoulement principal vers l'espace clos de chacune de la pluralité d'unités fonctionnelles peut s'écouler, et
le débit ou la pression du fluide s'écoulant à travers le canal d'écoulement principal est apte à être mesuré(e) par l'unité de mesure disposée dans le canal d'écoulement principal, ou le débit ou la pression du fluide s'écoulant à travers chacun de la pluralité de canaux d'écoulement de distribution est apte à être mesuré(e) par les unités de mesure disposées individuellement dans la pluralité de canaux d'écoulement de distribution.

4. Système de détection d'anomalie de paroi de séparation pour remplissage aseptique selon la revendication 2 ou la revendication 3,
dans lequel l'unité d'alimentation en milieu inclut une vanne d'alimentation et d'évacuation (612) qui est apte à commuter entre une alimentation du fluide vers l'espace clos et une évacuation du fluide de l'espace clos.

5. Système de détection d'anomalie de paroi de séparation pour remplissage aseptique selon la revendication 1,
dans lequel l'unité d'alimentation en milieu inclut un chemin de guidage de la lumière (631) qui est configuré pour fournir une lumière fournie depuis une source de lumière en tant que milieu de détection à l'espace clos.

6. Système de détection d'anomalie de paroi de séparation pour remplissage aseptique selon l'une quelconque des revendications 1 à 5,
dans lequel une pluralité desdites unités fonctionnelles de premier type sont disposées,
la partie arbre mobile est configurée pour être déplaçable dans une direction de rotation axiale ainsi que dans la direction axiale, et
l'unité fonctionnelle de premier type inclut une partie de fermeture qui est configurée pour fermer la partie d'évacuation en association fonctionnelle avec le déplacement de la partie arbre mobile.

7. Système de détection d'anomalie de paroi de séparation pour remplissage aseptique selon l'une quelconque des revendications 1 à 6,
dans lequel une pluralité desdites unités fonctionnelles de deuxième type sont disposées, et
l'unité fonctionnelle de deuxième type inclut une tige de vanne (42) en tant que partie arbre mobile et un corps de vanne (46) qui est disposé dans la tige de vanne et qui est configuré pour ouvrir et fermer la partie d'évacuation.

8. Système de détection d'anomalie de paroi de séparation pour remplissage aseptique selon l'une quelconque des revendications 1 à 7,
dans lequel une pluralité desdites unités fonctionnelles de troisième type sont disposées,
la partie arbre mobile est configurée pour être déplaçable dans une direction de rotation axiale ainsi que dans la direction axiale, et
l'unité fonctionnelle de troisième type inclut une partie de fixation (74) qui est configurée pour fixer le bouchon sur le récipient en association fonctionnelle avec le déplacement de la partie arbre mobile.

9. Procédé de détection d'anomalie de paroi de séparation pour remplissage aseptique pour détecter une anomalie liée à une paroi de séparation (57) incluse dans une unité fonctionnelle pour remplissage aseptique, l'unité fonctionnelle correspondant à au moins un type sélectionné parmi une pluralité d'unités fonctionnelles de premier type correspondant individuellement à une pluralité de vannes de remplissage (40), une pluralité d'unités fonctionnelles de deuxième type incluses individuellement dans la pluralité de vannes de remplissage, et une pluralité d'unités fonctionnelles de troisième type correspondant à une pluralité de têtes de bouchage (70) disposées dans une boucheuse (4) qui fixe un bouchon (22) sur chaque récipient tout en transportant un groupe de récipients remplis avec du contenu, l'unité fonctionnelle incluant une partie arbre mobile (42) qui est déplaçable au moins dans une direction axiale et la paroi de séparation qui assure l'étanchéité entre la partie arbre mobile et une partie support disposée autour d'un axe (52X) de la partie arbre mobile tout en permettant le déplacement de la partie arbre mobile par rapport à la partie support, la paroi de séparation séparant une région aseptique, dans laquelle est située une partie d'évacuation (45) de chacune d'une pluralité de vannes de remplissage disposées dans une machine de remplissage (3) qui remplit chaque récipient avec le contenu tout en transportant le groupe de récipients, d'une région non aseptique (R2) autour de la région aseptique (R1), le procédé de détection d'anomalie de paroi de séparation pour remplissage aseptique comprenant :
une étape d'alimentation consistant à fournir un milieu de détection utilisé pour détecter l'anomalie dans la pluralité d'unités fonctionnelles ; et
une étape de détection consistant à détecter l'anomalie liée à la paroi de séparation sur la base d'un état du milieu de détection fourni à la pluralité d'unités fonctionnelles,
dans lequel, dans l'étape d'alimentation, un espace clos (470) formé par la paroi de séparation, la partie support et la partie arbre mobile retient le milieu de détection dans un cas où l'anomalie ne se produit pas et laisse fuir le milieu de détection dans un cas où l'anomalie se produit.

10. Procédé de détection d'anomalie de paroi de séparation pour remplissage aseptique selon la revendication 9, comprenant en outre :
une étape de mesure consistant à mesurer un débit ou une pression d'un fluide en tant que milieu de détection fourni dans l'espace clos,
dans lequel, dans l'étape de détection, l'anomalie est détectée sur la base du débit ou de la pression.

11. Procédé de détection d'anomalie de paroi de séparation pour remplissage aseptique selon la revendication 9 ou la revendication 10, comprenant en outre :
une étape consistant à appliquer un liquide de détection sur la paroi de séparation depuis un extérieur avant l'étape d'alimentation,
dans lequel, dans l'étape d'alimentation, un fluide en phase gazeuse est fourni en tant que milieu de détection dans l'espace clos,
dans un cas où l'anomalie se produit avec l'exécution de l'étape d'alimentation, la fuite du milieu de détection de l'espace clos est notifiée par la génération de bulles d'air dérivées du liquide de détection, et
dans l'étape de détection, l'anomalie est détectée sur la base d'un état du milieu de détection indiqué par les bulles d'air.

12. Procédé de production d'un système de remplissage aseptique (1) incluant un système de détection d'anomalie de paroi de séparation, le procédé comprenant :
une étape consistant à fournir, à un système de remplissage aseptique existant (1) incluant une région aseptique (R1) dans laquelle est située une partie d'évacuation (45) de chacune d'une pluralité de vannes de remplissage (40) disposées dans une machine de remplissage qui remplit chaque récipient avec du contenu tout en transportant un groupe de récipients, une région non aseptique (R2) autour de la région aseptique (R1), et au moins un type d'unité fonctionnelle sélectionné parmi une pluralité d'unités fonctionnelles de premier type correspondant individuellement à la pluralité de vannes de remplissage (40), une pluralité d'unités fonctionnelles de deuxième type incluses individuellement dans la pluralité de vannes de remplissage (40), et une pluralité d'unités fonctionnelles de troisième type correspondant à une pluralité de têtes de bouchage (70) disposées dans une boucheuse (4) qui fixe un bouchon (22) sur chaque récipient tout en transportant le groupe de récipients remplis avec le contenu, une unité d'alimentation en milieu configurée pour fournir un milieu de détection utilisé pour détecter une anomalie liée à une paroi de séparation (57), qui est incluse dans l'unité fonctionnelle et sépare la région aseptique (R1) de la région non aseptique (R2), à la pluralité d'unités fonctionnelles,
dans lequel l'unité fonctionnelle inclut une partie arbre mobile (42) qui est déplaçable au moins dans une direction axiale (DI) et la paroi de séparation qui assure l'étanchéité entre la partie arbre mobile et une partie support disposée autour d'un axe de la partie arbre mobile tout en permettant le déplacement de la partie arbre mobile par rapport à la partie support, et
un espace clos (470) formé par la paroi de séparation, la partie support et la partie arbre mobile retient le milieu de détection fourni par l'unité d'alimentation en milieu dans un cas où l'anomalie ne se produit pas et laisse fuir le milieu de détection dans un cas où l'anomalie se produit.
